# EUROPEAN PATENT APPLICATION

(11) **EP 2 357 065 A1**
(43) Date of publication of application: **17.08.2011**
(21) Application number: 11154238.7
(22) Date of filing: 11.02.2011
(51) Int. Cl.: B29B 15/12, F16L 55/165

(54) **Impregnation plant for impregnating a liner with barrier layer**

(30) Priority: 12.02.2010 EP 10153485
(71) Applicant: Per Aarsleff A/S, 8230 Åbyhøj (DK)
(72) Inventor: Boyer, Manfred, 8310 Tranbjerg (DK)
(74) Representative: Nielsen, Henrik Sten

(57) **Abstract**

The present invention relates to an impregnation plant (10) for manufacturing a liner assembly (12a) comprising a first foil (48) and a liner (12) for being impregnated with a resin. The resin is curable by irradiation of light having wavelengths in the range between 200 nm and 475 nm. The liner is fibrous and flexible and defines a first surface and an opposite second surface. The first foil is flexible and has a coating of fleece material (56) on at least one side. The impregnation plant (10) comprises an impregnation station comprising a resin bath (28,28') for accommodating the liner, a resin reservoir, a nozzle (32,32'), a pipe system (38,38') and a resin pump (36,36') for propelling the resin from the resin reservoir in a direction towards the liner. The impregnation plant further comprises a wrapping station (46) for covering the liner with the first foil by juxtaposing and contacting the first surface of the liner (12) with the coating of fleece material (56) of the first foil (48).

## Description

The invention relates to systems and methods for impregnating a liner having one or more barrier layers and to a liner having one or more barrier layers.

Pipelines are commonly used to transport fluids over a long distance. Faulty pipeline systems may be renovated by introducing a lining tube into the pipeline. The lining tube, which further on will be referred to as a liner, may be placed inside the faulty pipeline so that the inner walls of the pipeline are completely covered by the liner The liner may be used to repair faults such as leakage by sealing the interior of the pipeline to the walls of the pipeline. Leaking pipelines may constitute a hazard for the environment and for personal health, since contaminated and/or dangerous fluids may escape the pipeline into the surrounding outside environment. Alternatively, the liner may be used preventively to repair worn, damaged or badly maintained pipelines to prevent further damage, which may eventually lead to a leakage

The lining technology may be used on any pipeline system such as gas pipelines, water pipelines etc The pipelines may have any orientation, such as e.g. vertical or horizontal Further, the location of the pipeline may be e.g. either below ground or above ground, indoor or outdoor, in private buildings or in industrial environments. The liner may be installed by simply pulling it into place inside the pipeline, e.g.. by the use of a rope or wire, and subsequently fixating the liner to the inner wall of the pipeline by use of e.g. compressed fluid, or alternatively, by using eversion, which is a technology of fastening one end of the liner onto a manhole and subsequently inverting the liner into the pipeline by the use of water, steam or pressurized gas.

The major advantage of the above technology is achieved in connection with underground pipelines, such as sewer pipelines. The renovation may be performed quickly and trenchlessly with minimum inconvenience to the surroundings and considerable lower costs compared to a complete replacement of the pipeline,

The liner is preferably made of a soft and flexible material, which is easy to package and transport to the installation site and which may be inserted into the pipeline system from the outside through e.g. a manhole or the like. When the liner is put in place inside the pipeline system it should be hardened for maximum stability The liner is therefore preferably made from a fibre material. The fibre material may be a woven or non-woven material and may e.g. be of any of the following types: glass, carbon, aramid, polyester, polyacrylonitrile, mineral, viscose, polyamide, polyacrylic or natural fibres or a combination of the above. The fibre material is impregnated with a resin, such as styrene/polyester or styrene-free polyester, styrene/vinylester or styrene-free vinylester, vinylester urethane, furan, phenol, water glass, epoxy, methacrylate, isocyanate or the like. The resin should be curable, e.g by application of heat or radiation, for an irreversible transition from a soft and flexible state into a hardened state One example of such a liner may be found in EP 1 920 913, to which reference is made and which is hereby incorporated in the present specification by reference. The fibre material may be e.g. a glass fibre material or felt material, which is flexible and at the same time may hold a large quantity of resin The material should exhibit affinity to the resin to allow the resin to soak the liner completely

The liner is typically impregnated by submerging the liner in a resin bath. When the liner is submerged, the resin will enter into the fibre material structure of the liner, so that the liner is soaked with resin. Thereafter the resin may be partially cured to achieve the soft and flexible state and avoid resin leaking from the liner.

When impregnating the liner using the above technology, there is a need to ensure that no voids exist inside the liner Such voids may be gas (air) bubbles trapped inside the fibre material after impregnation. Voids of any kind will constitute weak spots when the liner has been cured and may lead to premature degradation and damage to the liner. Voids may further lead to cracking of the liner and possibly to a leakage.

Curing the liner by using steam, IR or heat typically requires large amounts of energy and therefore UV or visual light curing is preferred. When the liner has been installed into a pipeline, the liner is therefore typically cured by irradiating the liner by UV radiation, or alternatively by violet or blue light. Since most pipelines are located outdoors, UV or visual light curable liners must be covered during storage and installation to prevent curing by solar irradiation before the installation has been concluded. Otherwise, liners which are brought to an installation site but not installed must be considered as spent since solar irradiation may have already initiated the curing process

The international patent application WO 2009/021479 discloses a relining tube which is surrounded by a film being opaque to UV light. The above technology will protect the non-installed liners from solar irradiation during storage.

It would therefore be an advantage to have the UV barrier permanently attached to the liner The European patent EP 1 180 225 B1 describes a liner being covered by a film coated by a fleece layer to improve the bond between the film and the liner.

It is therefore an object of the invention to provide methods and a system for impregnating a liner having barrier layers and to provide a liner having barrier layers.

The above need and the above object together with numerous other needs and objects which will be evident from the below detailed description are according to a first aspect of the present invention obtained by an impregnation plant for manufacturing a liner assembly, the liner assembly comprising a first foil and a liner for being impregnated with a resin, the resin being curable by irradiation of light having a specific wavelength or specific wavelengths in the range between 200 nm and 475 nm, the liner being fibrous and flexible and defining a first surface and an opposite second surface, the first foil being flexible and having on at least one side a coating of fleece material, the impregnation plant comprising:
a vacuum lock comprising a housing having an inlet and an outlet and defining an ambient pressure space near the inlet and a low pressure space near the outlet, the ambient pressure space and the low pressure space being separated by a substantially gas-tight seal comprising a first sealing element and a second sealing element located juxtaposed the first sealing element, the first and second sealing elements being flexible for allowing the fibrous liner to be conveyed through the seal between the first sealing element and the second sealing element in a direction from the inlet towards the outlet, the liner being degassed by compressing the liner into a compressed state between the first and second sealing elements and subsequently relaxing the liner into a substantially uncompressed state inside the low pressure space,
a vacuum pump communicating with the low pressure space for reducing the pressure in the low pressure space in relation to the pressure in the ambient pressure space,
an impregnation station being in gas-tight communication with the outlet of the vacuum lock, the impregnation station comprising a resin bath for accommodating the liner, a resin reservoir, a nozzle, a pipe system and a resin pump for propelling the resin from the resin reservoir via the pipe system and the nozzle into the resin bath in a direction towards the liner, and
a wrapping station for covering the liner with the first foil by juxtaposing and contacting the first surface of the liner with the coating of fleece material of the first foil.

In the impregnation plant according to the first aspect of the present invention the liner is impregnated while being conveyed through a vacuum lock and a resin bath. The liner is made of a soft and porous fibre material, such as a woven or non-woven material or fabrics or combination comprising glass fibre, polyester or felt or a combination of the above The material should preferably have a high resin affinity. The porous structure of the fibre material will contain a large volume of air. The air volumes may be encapsulated in resin during impregnation and constitute voids after curing. To avoid the above the liner is first of all compressed between two sealing elements to remove a substantial amount of the air located inside the liner. It must however be ensured that the liner is not crushed or damaged when compressing the liner. Therefore, the pressure applied to the liner by the sealing elements is limited.. Consequently, some amount of residual air will remain inside the liner after degassing The sealing element may comprise sealing lips or rollers or the like. The sealing element should be soft to allow it to deform and correspond to the compressed shape of the liner so that any air leakage is minimized.

To remove the residual air in the liner it is subsequently allowed to expand inside a low pressure space, which may define a low pressure chamber. The low pressure chamber is connected to a constantly running vacuum pump so that the low pressure chamber may define a partial vacuum. The residual air in the liner will expand in the low pressure chamber and the vacuum pump will suck away any residual air from the low pressure chamber. The liner will thereby become substantially degassed.

The liner subsequently enters the resin bath. Resin bath should in the present context be understood to mean any volume or body of liquid resin without specifying any particular shape. To ensure that the liner is completely soaked and all cavities in the liner are filled with resin in the resin bath, a resin jet is propelled against the liner The resin jet will allow resin to penetrate deep into the liner by applying a resin pressure and a velocity at the liner. The flow jet is propelled from a nozzle connected to a pipe system and a pump is used to pump resin from the reservoir towards the liner. The flow jet will allow the resin to penetrate deeper into the liner and fill out the cavities better than by e.g. submerging the liner The word "nozzle" should be understood to mean any form of fluid outlet having either a constant or a varying shape, e.g a straight shape, a converging shape or a diverging shape. The ambient pressure space is understood to encompass any space having atmospheric pressure..

The wrapping station, which also includes a welding station, encloses the liner with a foil. By coating the side of the foil facing the liner with a fleece layer the foil will remain bonded to the liner at all times, also after installation Therefore, there is no need to remove the foil and the liner may be stored outdoors for extended periods of time without any additional protective film. The first foil should be flexible, preferably made of plastic, in order to fit smoothly into the pipeline. Further, the elasticity or flexibility of the first foil should be at least comparable to the flexibility of the liner for not hindering the expansion of the liner during installation and curing

In the present context the first foil may be located either on the inwardly facing surface of the tubular liner or alternatively on the outwardly facing surface of the liner depending on which installation technique is used, e.g, either the eversion technology or the "standard" technology where the liner is simply dragged into the pipeline. Typically, the fleece layer will be facing outwardly when the liner is installed.. However, it may also be contemplated that for some applications the fleece layer may be facing inwardly. Further, fleece is understood to encompass the material generally known as fleece as well as other adhesion promoting materials such as e g. TPU

In a further embodiment according to the first aspect of the present invention, the liner is covered by a second foil juxtaposing and contacting the second surface of the liner, To avoid the opposing walls of the tubular liner from adhering and joining in case of an outwardly facing first foil or alternatively for avoiding leakage in case of an inwardly facing first foil, and for simplifying the installation of the liner, the surface of the liner facing away from the first foil may be covered by a second foil.

In a further embodiment according to the first aspect of the present invention, the first foil and/or the second foil have an optical filter characteristic substantially eliminating light transmission of the specific wavelength or the specific wavelengths in the range between 200 nm and 475 nm. The optical filter characteristics eliminate radiation in the wavelength range 200 nm to 475 nm. Typically all light in the wavelength range 200 nm to 475 nm should be eliminated, however, some resins may be curable by one or some specific wavelengths only, and thus only those specific wavelengths must be eliminated. The expression eliminating light transmission is meant to encompass both absorbing and reflecting the incoming light so that no light of the specific wavelength or wavelengths penetrates the foil The first surface should be the surface which is intended to face the outside, e.g. the solar light, during storage.

In a further embodiment according to the first aspect of the present invention, the optical filter characteristic of the first foil and/or the second foil substantially eliminates light transmission of the specific wavelength or the specific wavelengths in the range between 200 nm and 475 nm to a level avoiding any substantial curing of the resin of the liner during at least 1 hour, preferably 1 day, more preferably 1 week, most preferably 1 month or more such as 6 months, of exposure to sunlight of the liner assembly It is contemplated that a complete elimination of the specific wavelengths may be difficult to achieve without making the foil excessively thick. Typically, the installation process of a liner may last for at least one hour, during which time the liner must not cure. Thus, the minimum filter properties of the first foil may be considered to be the elimination of a sufficient amount of radiation to avoid substantial curing for one hour when exposed to sunlight. It is preferred that the liner can be stored outdoors for longer times, since indoor storage space generally is limited. Therefore storage times up to one month may be contemplated. The intensity of sunlight on the surface of the earth depends of course on various conditions such as location, time of day, season and atmospheric effects, however, as a general rule the intensity of sunlight on the surface of the earth rarely is beyond 1kW/m².

In a further embodiment according to the first aspect of the present invention, the first foil has an optical filter characteristic substantially eliminating light transmission of the specific wavelength or the specific wavelengths to at least 90%, preferably 95%, more preferably 99% and most preferably 99.9% of the incoming radiation. For allowing long time storage, a significant percentage of the light of the specific wavelengths must be eliminated.

In a further embodiment according to the first aspect of the present invention, the liner is tubular and the first foil and/or second foil is either applied as two opposing foils enclosing the liner or as a single foil enclosing the liner. The two opposing foils or alternatively the single foil is/are subsequently welded together by one/two weld(s) along the direction of the liner to form a unitary foil. ln this way the first and/or second foil may be applied with greater accuracy to a tubular liner. To additionally simplify the welding when welding two opposing foils, one of the opposing foils may be supported by wedges

In a further embodiment according to the first aspect of the present invention, the first foil and/or second foil exhibits a transmittance to one or more wavelengths in the range outside the specific wavelength or the specific wavelengths, preferably between 475 nm and 780 nm, such as wavelengths in the range between 475 nm and 550 nm, or alternatively 550 nm and 600 nm, or alternatively 600 nm and 780 nm.

It is an advantage to allow for light inspection, preferably visual inspection, of the liner after impregnation and sometimes also after installation and curing. By allowing some wavelengths of light to penetrate the foil the liner can be inspected through the foil

In a further embodiment according to the first aspect of the present invention, the transmittance of the first foil and/or second foil amounts to at least 25%, preferably 50%, more preferably 70% and most preferably 90% of the incoming radiation. To ensure a sufficient inspection, at least 25% of the radiation is transmitted though the first foil and/or second foil. It is understood that the above transmitted radiation constitutes one or more wavelengths outside the specific wavelengths in which the resin initiates curing.

In a further embodiment according to the first aspect of the present invention, the first foil and/or the second foil comprise a resin barrier and optionally a solvent barrier, such as a styrene barrier in case the resin includes styrene. A resin barrier incorporated into the first foil and/or the second foil will offer additional security against leakage of resin to the outside of the liner assembly The use of PA in the foil will prevent styrene-based resins from leaking.

In a further embodiment according to the first aspect of the present invention, the fleece material is covering the at least one side of the first plastic foil entirely By completely or entirely covering the side of the plastic foil facing the liner with fleece, it is ensured that a complete bonding of the foil and the liner is established and thereby the risk of voids between the liner and the foil is eliminated. It is here understood that the fleece may partially overlap at the location of the weld.

In a further embodiment according to the first aspect of the present invention, each of the coating of fleece material and the first foil has a thickness of between 0.1 mm and 0.3 mm, such as 0.2 mm. Typically, both the foil and the fleece coating can be made very thin in order to be light and essentially transparent and not inhibit the inspection of the liner.

In a further embodiment according to the first aspect of the present invention the resin reservoir may constitute a resin receptacle for receiving excess resin. By excess resin is meant any resin exiting the resin bath while not being accommodated inside the liner Excess resin is a result of pressure in the resin bath/nozzle and is preferred since it shows that resin has penetrated the liner and impregnated it sufficiently The excess resin is collected in the resin receptacle and may be re-used by re-circulating it to the resin bath via the nozzle. A filter may be employed in the resin receptacle to remove any contamination, such as fibres from the liner, in the excess resin to avoid a clogging of the nozzle or pipe system.

In a further embodiment according to the first aspect of the present invention the impregnation station may have a first end being in gas-tight communication with the outlet of the vacuum lock and a second end being in gas-tight communication with a further vacuum lock, the further vacuum lock comprising a further housing having a further inlet and a further outlet and defining a further ambient pressure space near the further outlet and a further low pressure space near the further inlet, the further ambient pressure space and the further low pressure space being separated by a Substantially gas-tight further seal comprising a further first sealing element and a further second sealing element located juxtaposed the further first sealing element, the further first and second sealing elements being flexible for allowing the fibrous liner to be conveyed through the further seal between the further first sealing element and the further second sealing element in a direction from the further inlet towards the further outlet. The working principle of the further vacuum lock is reversed compared to the original vacuum lock. The further vacuum lock should apply a very limited force on the liner to avoid pressing out any resin accommodated inside the liner It should be noted that the two vacuum locks may have different working principles, i.e. one may employ sealing lips while the other may employ rollers.

In a further embodiment according to the first aspect of the present invention the impregnation station has a first end being in gas-tight communication with the outlet of the vacuum lock and a second end being open to the outside ambient pressure, the first end and the second end being separated gas-tight by the resin The resin will thus act as a further vacuum lock comprising a liquid vacuum lock between the low pressure space and the ambient air pressure A liquid vacuum lock will have the additional advantage of substantially zero leakage. The ambient air pressure acting on the resin at the second end will act as a pressure force to push the resin towards the first end. This pressure may be balanced by the pressure inside the resin bath generated by the supply of resin from the nozzle and pipe system. Alternatively, the pressure force may be balanced by the gravity force from the resin so that the gravity force of the pile of resin located near the first end and above the resin level of the second end compensates the pressure force of the ambient air pressure. Thus, the resin level at the first end of the receptacle will be higher than the resin level at the second end.

In a further embodiment according to the first aspect of the present invention the resin bath is formed between the first and second end by the continuous supply of resin by the nozzle.. This way, the resin bath must not comprise a reservoir suitable for permanently storing the resin, but may simply comprise a defined space where resin and liner may interact. This means the continuously supplied resin may either be accommodated inside the liner or exit the resin bath as excess resin. The resin bath may thus comprise e.g. a partially enclosed volume or alternatively a single surface or the resin bath may be entirely defined by the continuous supply of resin.

In a further embodiment according to the first aspect of the invention the impregnation plant may comprise a system for monitoring the level of resin in the resin reservoir. Such system may range from a simple floatation device inside the resin reservoir to more advanced radar detectors for detecting the surface of the resin in the resin reservoir..

in a further embodiment according to the first aspect of the invention the impregnation plant may comprise a resin supply tank and a resin supply pump for delivering resin from the resin supply tank to the resin reservoir. When the liner is constantly impregnated the resin level in the resin reservoir will sink. To compensate for this and to keep the resin level constant, resin must be injected into the resin reservoir. This may be done by delivering resin to the resin reservoir from a nearby resin supply tank via a pump.

In a further embodiment according to the first aspect of the invention the impregnation plant may comprise two nozzles mounted in a juxtaposed position for applying the resin on both sides of the liner. The nozzles are preferably mounted so that the resin flow jet is applied perpendicular to the liner surface. Since the resin can penetrate the liner from two opposite directions, the resin needs only penetrate half the distance compared to when the resin jet is only applied from one direction This way the resin needs not penetrate the entire liner and the risk of voids will be additionally reduced. The impregnation plant may further comprise a plurality of nozzles, such as 2-1000, preferably 100-800, more preferably 400-600, most preferably 400, or alternatively 200-400, or alternatively 400-600. The nozzles should be equally distributed so that the whole surface of the liner is subjected to the resin flow jet and preferably equally distributed on each side of the liner. If some areas of the liner are not subjected to the resin jet, they may not be completely impregnated and consequently a void may arise there.

In a further embodiment according to the first aspect of the invention the impregnation plant may comprise a low pressure space having an absolute pressure lower than 100 kPa, preferably 10-90 kPa, more preferably 50-70 kPa, most preferably 60 kPa, or alternatively 50-60 kPa, or alternatively 60-70 kPa. Lower pressure will reduce the amount of voids in the liner. High vacuum is costly to achieve and maintain and will in most cases not be necessary to achieve the intended void-free result.

In a further embodiment according to the first aspect of the invention the impregnation plant may comprise a system for monitoring the pressure in the low pressure chamber. Such a system may comprise a pressure sensor in the low pressure space. The pressure in the low pressure space should be controlled since it influences the amount and severity of any voids in the liner and may additionally influence the resin level.

In a further embodiment according to the first aspect of the invention the sealing element may comprise a roller seal or alternatively a lip seal or yet alternatively a roller+lip seal.. A roller has the advantage of being able to provide a gas-tight seal with low wear compared to the alternative lip seals. The roller may in turn preferably be sealed by lip seals in relation to the housing.

In a further embodiment according to the first aspect of the invention the roller may comprise rubber foam. Rubber foam is a soft and air-tight material which may preferably be used for the rollers. By having soft rollers the airtight properties may be realized without any need of compressing the liner excessively.

In a further embodiment according to the first aspect of the invention the liner may be guided through the device by one or more guiding rollers. The guiding rollers as well as the rollers in the vacuum lock may be driven by a motor, such as a pneumatic motor or an electric motor. In this way the liner may be conveyed inside the impregnation plant.

ln a further embodiment according to the first aspect of the invention the vacuum lock may be having more than 2 rollers, such as e.g. 3-10 rollers, or preferably 6 rollers. Having a series of rollers will improve the sealing quality by providing additional compartments having a pressure between the pressure of the low pressure compartment and the ambient pressure In this configuration the pressure difference across a pair of rollers will be lower and consequently the amount of gas leaking through the seal will be lower. The rollers may be configured in juxtaposed pairs in a row, or alternatively form a sequence where each roller, except the first and the last, is juxtaposed to 2 other rollers. The compartments formed between the rollers may optionally be connected to a vacuum pump.

In a further embodiment according to the first aspect of the invention the impregnation plant may comprise a control unit. A control unit may be used to control the different features of the invention, such as the pressure in the low pressure space, the pressure of the resin jet, the level of resin, the velocity of the liner and many other features, which will be evident from the description.

In a further embodiment according to the first aspect of the invention the liner may be submerged in the resin reservoir The submersion of the liner may be used in addition to the flow jet for impregnating the liner. The submersion may be performed either before, during or after applying the flow jet.

In a further embodiment according to the first aspect of the invention the resin-filled receptacle comprises a first vessel having an elongated and substantially vertical orientation and defining an upper inlet and a lower outlet, a second vessel having an elongated and substantially vertical orientation and defining a lower inlet and an upper outlet, and a third vessel connecting the lower outlet and the lower inlet. Upper and lower should in this context be understood in relation to the earth gravity The shape described above has been proved to be the most efficient concerning material use. If a vacuum is applied to the upper inlet, the resin level will rise in the first vessel and fall in the second vessel if it is assumed that ambient pressure is applied to the second opening. The earth gravity and ambient pressure determine the resin levels as discussed above. Assuming earth conditions, typical vacuum pumps/seals and typical resin density, the resin-filled receptacle and/or the second vessel of the resin-filled receptacle should have/has an elongation of 1-10 meters, preferably 2-6 meters, more preferably 3-5 meters, and most preferably 4 meters, or alternatively 2-4 meters, or alternatively 4-6 meters.

In a further embodiment according to the first aspect of the invention the impregnation plant may comprise a pre-curing device for applying radiate energy onto the liner after impregnation. Such pre-curing may be achieved by applying radiate energy directly after impregnation of the liner This way the resin will attach better to the liner. The liner may also be thickened by causing the resin to be more viscous or gel-like by including additives such as MgO into the resin.

The vacuum lock comprises a housing having an inlet and an outlet and defining an ambient pressure space near the inlet and a low pressure space near the outlet, the ambient pressure space and the low pressure space being separated by a substantially gas-tight seal comprising a first sealing element and a second sealing element located juxtaposed the first sealing element, the first and second sealing elements being flexible for allowing a fibrous liner to be conveyed through the seal between the first sealing element and the second sealing element in a direction from the inlet towards the outlet, the liner being degassed by compressing the liner into a compressed state between the first and second sealing elements and subsequently relaxing the liner into a substantially uncompressed state inside the low pressure space. The above vacuum lock will allow a liner to enter from an ambient pressure space into a low pressure space with a low leakage At the same time the liner is compressed, and gas located inside the liner is drained off The rollers are preferably connected to a motor so that the liner is driven and guided through the vacuum lock It is further evident that the vacuum lock may be used in the opposite direction, i e for conveying a liner from a low pressure space to an ambient pressure space or alternatively from a high pressure space to a low pressure space or vice versa.

The above need and the above object together with numerous other needs and objects which will be evident from the below detailed description and are according to a second aspect of the present invention obtained by an impregnation assembly for impregnating a liner assembly, the liner assembly comprising a first foil and a liner for being impregnated with a resin, the resin being curable by irradiation of light having a specific wavelength or specific wavelengths in the range between 200 nm and 475 nm, the liner being fibrous and flexible and defining a first surface and an opposite second surface, the first foil being flexible and having on at least one side a coating of fleece material, the impregnation assembly comprising an impregnation station and a wrapping station, a station comprising a resin bath for accommodating a fibrous liner, a resin reservoir, a nozzle, a pipe system and a resin pump for propelling the resin from the resin reservoir via the pipe system and the nozzle into the resin bath in a direction towards the liner, the wrapping station covering the liner with the first foil by juxtaposing and contacting the first surface of the liner with the coating of fleece material of the first foil. From the above it is evident that the impregnation station and the wrapping station according to the first aspect of the invention may be used as an impregnation assembly. The above impregnation station may preferably be made substantially flat and compact. It is further evident that all the above mentioned features according to the first aspect and relating to the liner assembly, the impregnation station and/or the wrapping station according to the first aspect apply equally to the second aspects.

The above need and the above object together with numerous other needs and objects which will be evident from the below detailed description are according to a third aspect of the present invention obtained by a method of impregnating a liner assembly by providing an impregnation plant, the liner assembly comprising a first foil and a liner for being impregnated with a resin, the resin being curable by irradiation of light having a specific wavelength or specific wavelengths in the range between 200 nm and 475 nm, the liner being fibrous and flexible and defining a first surface and an opposite second surface, the first foil being flexible and having on at least one side a coating of fleece material, the liner being fibrous and flexible, the impregnation plant comprising:
a vacuum lock comprising a housing having an inlet and an outlet and defining an ambient pressure space near the inlet and a low pressure space near the outlet, the ambient pressure space and the low pressure space being separated by a substantially gas-tight seal comprising a first sealing element and a second sealing element located juxtaposed one another, the first and second sealing element being flexible,
a vacuum pump communicating with the low pressure space,
an impregnation station being in gas-tight communication with the outlet of the vacuum lock, the impregnation station comprising a resin bath, a resin reservoir, a nozzle, a pipe system and a resin pump, and
a wrapping station, and by performing the following steps:
   reducing the pressure in the low pressure space in relation to the pressure in the ambient pressure space,
   degassing the liner by conveying the liner through the seal between the first sealing element and the second sealing element in a direction from the ambient pressure space to the low pressure space,
   impregnating the liner by conveying the liner through the impregnation station and by using the pump propelling the resin from the resin reservoir via the pipe system and the nozzle into the resin bath in a direction towards the liner, and
   covering the liner with the first foil by juxtaposing and contacting the first surface of the liner with the coating of fleece material of the first foil by using the wrapping station,

It has been shown that by impregnating a liner according to the above method the amount of voids caused by air/gas bubbles inside the liner will be considerably reduced. The method may be applied as a continuous process, where a liner of infinite length is impregnated and afterwards cut into suitable lengths. Alternatively, the liner is cut into suitable lengths before entering the impregnation plant Yet alternatively, the method may be applied in a mobile impregnation plant, e.g. where the impregnation plant is mounted on a truck for on-site impregnation and installation.

The above need and the above object together with numerous other needs and objects which will be evident from the below detailed description are according to a fourth aspect of the present invention obtained by a method of impregnating a liner assembly by providing an impregnation assembly, the liner assembly comprising a first foil and a liner for being impregnated with a resin, the resin being curable by irradiation of light having a specific wavelength or specific wavelengths in the range between 200 nm and 475 nm, the liner being fibrous and flexible and defining a first surface and an opposite second surface, the first foil being flexible and having on at least one side a coating of fleece material, the impregnation assembly comprising:
a resin bath, a resin reservoir, a nozzle, a pipe system, a resin pump and a wrapping station, and
   by performing the following steps:
impregnating the fibrous liner by accommodating and conveying the liner through the resin bath and propelling the resin from the resin reservoir via the pipe system and the nozzle into the resin bath in a direction towards the liner,
covering the liner with the first foil by juxtaposing and contacting the first surface of the liner with the coating of fleece material of the first foil by using the wrapping station.

It is preferred that the methods according to the third and fourth aspect of the present invention may be used together with the systems according to the first and second aspect of the present invention.

The above need and the above object together with numerous other needs and objects which will be evident from the below detailed description are according to a fifth aspect of the present invention obtained by a liner assembly comprising a first foil and a liner being impregnated with a resin, the resin being curable by irradiation of light having a specific wavelength or specific wavelengths in the range between 200 nm and 475 nm, the liner being fibrous and flexible and defining a first surface and an opposite second surface, the first foil being flexible and having on at least one side a coating of fleece material, the first foil covering the liner and the coating of fleece material of the first foil juxtaposing and contacting the first surface of the liner

The above liner assembly according to the fifth aspect is preferably produced by using any of the methods and/or systems according to the previous mentioned aspects.

According to a further embodiment of the fifth aspect, the first foil is impermeable to resin and the liner is being impregnated by resin before the first foil is applied on the liner Covering the liner by the first foil after it has been impregnated will simplify the impregnation process significantly

It is further evident that numerous variations of the systems and methods described above are possible, in particular by combining some of the features of the aspects and embodiments described above,

The invention will now be briefly described by reference to the drawings, in which
FIG 1 shows a side cut-out view of a first and currently preferred embodiment of an impregnation plant,
FIG 2 shows a further embodiment of a compact impregnation plant, which may be suitable for a mobile impregnation plant,
FIG 3 shows two different embodiments of a vacuum lock for use with an impregnation plant,
FIG 4 shows an impregnation station for use in an impregnation plant,
FIG 5 shows a liner assembly having a barrier layer and a fleece layer,
FIG 6 shows an alternative embodiment of a first foil of a liner assembly having barrier and fleece properties, and
FIG 7 shows the renovation of a leaking pipeline by using a liner assembly having a barrier layer and a fleece layer.

A detailed description of the figures of specific and currently preferred embodiments of the invention follows below.

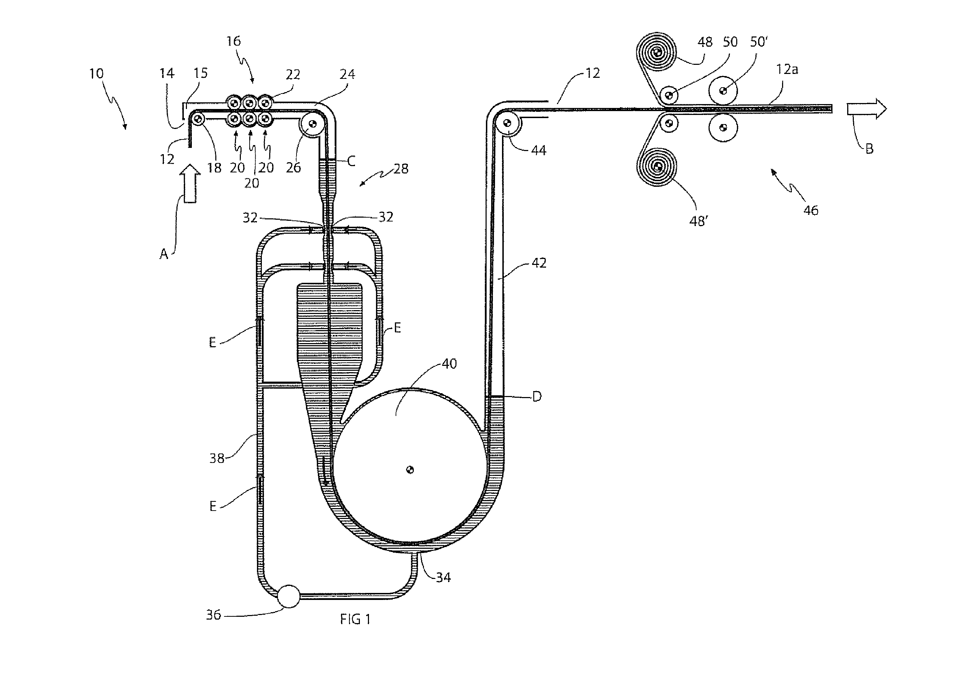

FIG 1 shows an impregnation plant 10 for impregnating a liner 12 with a resins. The resin is indicated in FIG 1 by hatching. The liner 12 is used for lining and re-lining pipelines such as sewer pipelines. The liner 12 is made of a glass fibre material or alternatively a felt material or a combination. The liner 12 has a flat shape with an indefinite length and a predefined width determined by the circumference of the pipeline to be lined. The width of the liner 12 may typically range from a few centimetres to a few meters. The liner 12 is conveyed in a travelling direction following arrow A and enters the impregnation plant 10 at an opening 14 The liner 12 is transported and directed via a first guiding roller 18 through the opening 14 into an ambient pressure chamber 15. The ambient pressure chamber 15 and a low pressure space 24 together form part of a vacuum lock 16. The vacuum lock 16 is divided into the ambient pressure chamber 15 and the low pressure space 24 by three vacuum seals 20 mounted in a row Each vacuum seal 20 comprises two juxtaposed mounted sealing rollers 22, 23. The sealing roller 22 has a circular shape and a flexible surface. The sealing roller 22 may preferably be made of a flexible and pressure-tight material such as e g rubber to achieve a good sealing effect. The sealing roller 22 is mounted so that it seals the space between the wall of the vacuum lock 16 and the juxtaposed mounted sealing roller 23 substantially gas-tight. The sealing roller 22 is preferably made to apply a force to the wall of the vacuum lock 16 as well as to the juxtaposed mounted sealing roller 23. The sealing rollers 22, 23 may be slightly deformed by the force. Optionally, a separate gasket may be used to improve the sealing and/or reduce the friction between the wall of the vacuum lock 16 and the sealing roller 22. Such a gasket should be made of low friction material. The sealing rollers 22, 23 rotate in opposite rotational directions so that the liner 12 may be transported in the travelling direction between the rollers 22, 23.

The liner 12 is compressed between the sealing rollers 22, 23 so that no substantial amount of air may leak into the low pressure space 24 between the rollers 22, 23. The sealing rollers 22, 23 should be made significantly less flexible than the liner 12, so that the liner 12 is compressed to a fully compressed state. The fully compressed state should be understood to mean the state where the liner 12 is compressed by the rollers 22, 23 to its maximum flexibility, but still may resume an uncompressed state, i..e substantially the initial state, when relaxed, i.e.when the compression force from the rollers 22, 23 is removed During the compression the force from the rollers 22, 23 must not permanently deform the shape of the liner 12 or substantially damage the material, so that the uncompressed state is not reached when removing the compression force. The sealing rollers 22, 23 may optionally be spring-loaded in direction towards each other for the rollers 22, 23 to be able to apply a higher pressure onto the liner and at the same time be able to adapt to any unevenness of the liner 12.

The compartments between the vacuum seals 20 may have a pressure between the pressure of the low pressure space 24 and the ambient pressure. This reduces the pressure force and sealing requirement of each separate vacuum seal 20. Optionally, the compartments between the vacuum seals 20 may be connected to a vacuum pump (not shown) for achieving a lower pressure inside the low pressure space Alternatively, a pressure regulator may be used to define a specific pressure inside each of the compartments between the vacuum seals 20.

After the vacuum seals 20 the liner enters the low pressure space 24 The rollers will have removed most of the air inside the liner 12 Inside the low pressure space 24 the liner 12 will resume an uncompressed state. The low pressure space 24 is connected to a vacuum pump (not shown), which preferably constantly acts to reduce the pressure inside the low pressure space 24. The pressure in the low pressure space 24 should be considerably lower than the ambient (atmospheric) pressure The vacuum pump may e.g. be of the piston type to achieve a suitable pressure in the low pressure space 24 of about 50% to 70% of the atmospheric pressure. The low pressure inside the low pressure space 24 will allow any residual gas bubbles inside the liner 12 to expand and exit the liner 12. The vacuum pump (not shown) should preferably run continuously to allow a constant low pressure, since a leakage may quickly result in an unsuitably high pressure inside the low pressure space 24

The liner 12 is directed within the low pressure space 24 by a second guiding roller 26. The vacuum efficiently acts on any gas volumes still present within the liner Any gas volume inside the liner 12 will expand due to the vacuum and the gas will be sucked away by the vacuum pump (not shown) Consequently, the liner 12 will be degassed of any substantial amount of air left within the liner after the compression by the sealing rollers 22, 23. Any air left within the liner 12 will constitute voids after impregnation. Such voids may compromise the material properties of the impregnated liner and may lead to a rupture of the liner 12.

The liner subsequently enters a resin bath 28. The resin bath 28 is filled with a resin. The resin is preferably a polymeric resin and more preferably a light-curable polymeric resin A set of nozzles 32 is located on each side of the walls of the resin bath 28. The nozzles 32 constitute a reduced flow area for achieving a flow velocity of the resin through the nozzles 32. The nozzles 32 inject resin into the resin bath 28 towards the liner 12 with a flow velocity so that a jet is formed The jet is directed towards the liner 12 and interacts with the liner 12 When the jet is interacting with the liner 12, the flow velocity will be reduced and the pressure will be increased. The locally increased pressure at the point of interaction between the flow jet and the liner 12 will allow the resin to enter further into the liner 12. The flow velocity will additionally cause the resin to reach even further into the liner 12. Preferably, a large number of nozzles is used, such as 300 to 500, to ensure that the whole liner 12 is subjected to a flow jet. The nozzles may be placed on both sides of the liner 12 and preferably spread out on the wall of the resin bath 28.

The resin is guided into the nozzles 32 through the resin bath 28 via the bottom 34 of the resin bath 28 and via a pump 36 and a pipe system 38, forming a closed circuit The resin will circulate following the arrows E indicated in the resin. The liner 12 is further guided by a third guiding roller 40 near the bottom 34 of the resin bath 28. The liner 12 will then exit the resin bath 28 into an ambient pressure space 42 The fourth guiding roller 44 directs the liner 12 out of the resin bath 28 to the outside. The space may optionally be used for pre-curing the resin-impregnated liner 12.

The ambient pressure space 42 may be used for applying pre-curing to the resin Pre-curing may be applied by a heat or radiation source and has the objective of turning the liquid resin into a semi-solid state The pre-curing acts to partially cure the resin to achieve a highly viscous liquid for avoiding any resin leaking from the liner 12 and for achieving a simplified handling of the liner 12. In subsequent stages the impregnated liner 12 may be wrapped in one or more layers of plastic foil, cut into suitable lengths, folded into transportable packages and loaded on a truck for transportation to an installation site.

It should be noted that there is a difference in resin level inside the resin bath.. This is due to the different pressures inside the resin bath 28. The pressure along the direction of the liner from level C to level D will first rise until the lowest point near the bottom 34 is reached. The pressure will fall until the level D is reached. Local pressure deviations may result from the flow jet. In the present embodiment the resin bath 28 constitutes a second vacuum lock The resin bath takes the shape of a U The resin level at the end of the resin bath 28 communicating with the low pressure space 24 will be higher than the resin level at the second end communicating with the ambient pressure space, assuming a standard pressure and gravity. The ambient air pressure acting on the resin at the second end will act as a pressure force to push the resin towards the low pressure space. The gravity force from the resin may balance the pressure force so that the gravity force of the pile of resin located near the low pressure space and above the resin level D will compensate the pressure force of the ambient air pressure.

The pressure force acting on the resin is permitting a higher resin pillar on the vacuum side than on the ambient side The difference in length is calculated according to the specific density of the resin. An ambient pressure of 100 kPa absolute is assumed The direction of gravity is assumed to be in the direction towards the lower end of the figure. The value of the gravitational constant is assumed to be 9.81 N/kg. Having a resin density of around 1 1 kg/cm³ will yield a resin pillar and minimum height of the resin bath 28 of 9 meters when assuming a perfect vacuum. Assuming less than a perfect vacuum will lower the minimum height of the resin bath 28. Assuming a typical pressure of 60% of the atmospheric pressure inside the low pressure space will yield a minimum height of the resin bath of 4 m. To avoid any leakage of resin due to local pressure fluctuations a safety margin should be applied when dimensioning the resin bath 28

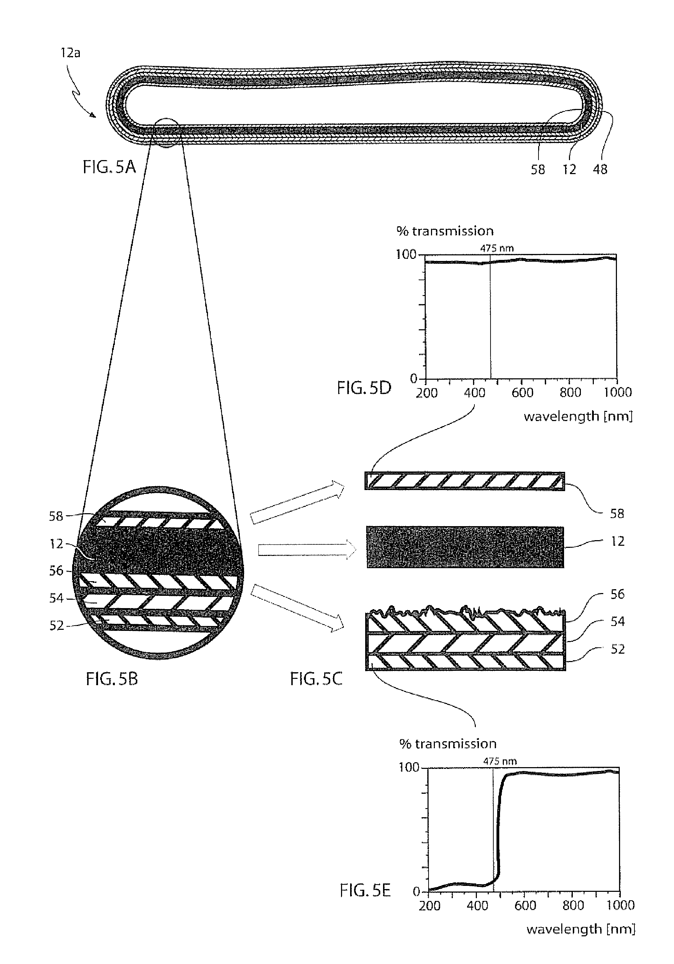

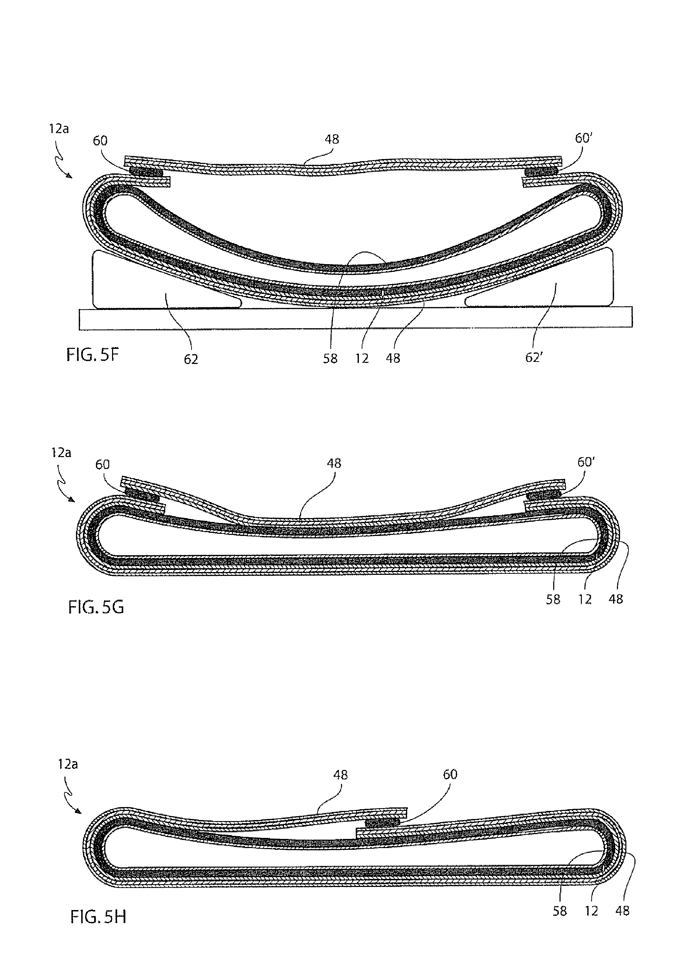

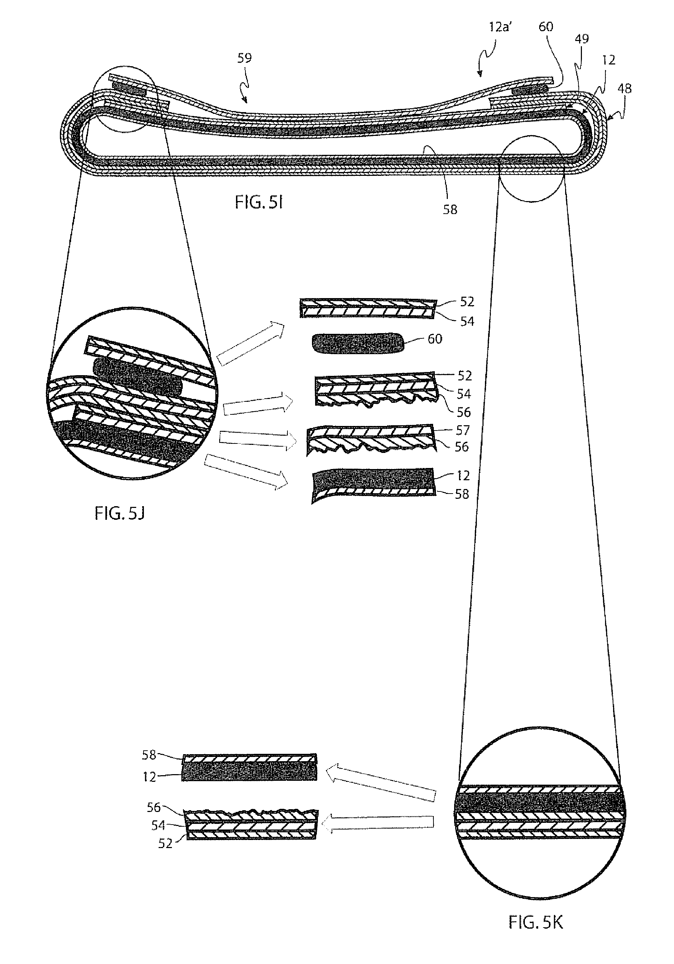

After exiting the impregnation station 11, the liner 12 enters a wrapping station 46, constituting a combined welding and wrapping station. In the wrapping station 46 two plastic foils 48 and 48', in width corresponding to the liner 12, are applied on the downwardly and upwardly facing portions, respectively, of the outwardly facing surface of the impregnated liner 12 The foils 48 and 48', being of a first type which will be described in more detail in connection with FIG 5, are pressed towards the liner 12 by two sets of opposing rollers 50 and 50', and subsequently the two foils 48 and 48' are welded together by two welds along the edge in the direction of the liner, thereby forming a tube around the liner 12. The liner 12 and the foils 48 and 48' form a tubular liner assembly 12a having a flat shape when stored in a flexible non-cured state The liner assembly 12a may in an alternative embodiment (not shown here, but explained in more detail in connection with FIG 5G) be formed by wrapping a single large foil 48 around the liner 12 and pressing and subsequently welding the opposing ends together by a single weld to form the tubular liner assembly 12a. The latter method is preferably used for smaller liner dimensions, such as liners having a diameter less than one meter. The welding is preferably performed using any of the technologies heat welding, ultrasound welding, high frequency welding and laser welding.

The resin level C and D should be continuously monitored and additional resin should continuously be delivered to the resin bath 28 to keep the resin levels C and D substantially constant within a certain margin. Resin will continuously exit the resin bath by being impregnated into the liner 12 Preferably, a resin supply tank is connected to the resin bath 28 via a supply pump (not shown), which is controlled by a control system (not shown).

The pressure in the low pressure space 24 should as well be monitored and controlled, since any pressure fluctuation in the low pressure space 24 results in a deviation in the resin levels C and D. A pressure rise in the low pressure space 24 will make the level C drop To avoid any leakage of resin if the pressure in the low pressure space 24 rises the ambient pressure space 42 should be properly sealed up to the fourth guiding roller 44, located at substantially the same elevation as the vacuum lock 16.

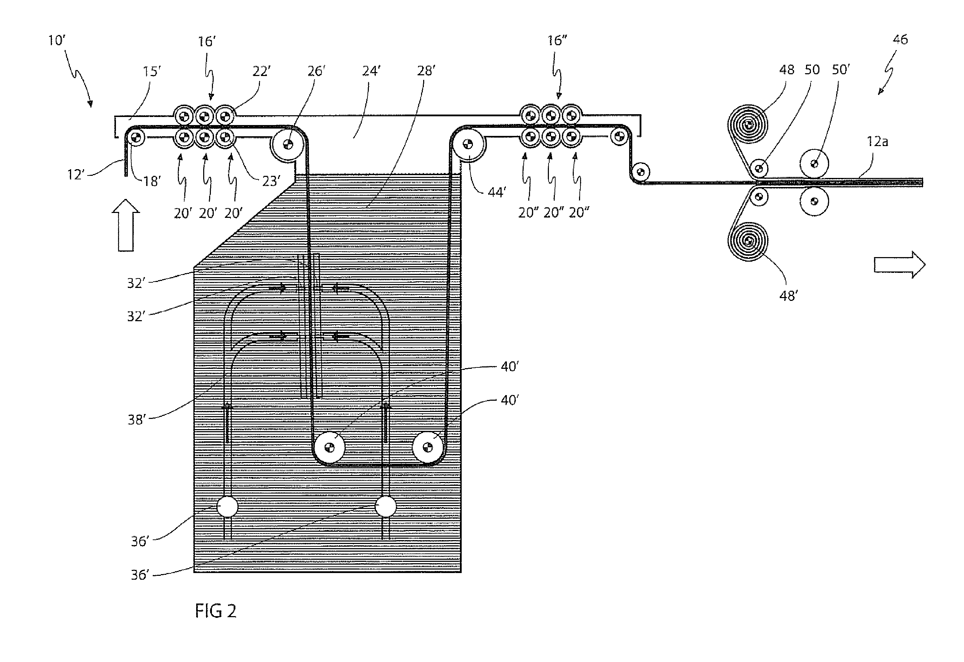

FIG 2 shows a compact impregnation plant 10' for impregnating a liner 12'. The liner 12' is fed by a first guiding roller 18' from an ambient pressure chamber 15' to a low pressure space 24' via a primary vacuum lock 16' comprising a series of three vacuum seals 20' The functional principle of the vacuum seal 20' is analogous to the description in FIG 1. The liner is then guided by a second guiding roller 26' into a resin bath 28' filled with a resin. The resin is indicated in FIG 2 by hatching. The resin bath 28' comprises a set of nozzles 32' directing a resin flow jet onto the liner 12'.

The nozzles 32' are fed with pressurized resin from a pipe system 38' connected to a pump 36'. The pump 36' sucks resin from the bottom of the resin bath 28', forming a closed circuit. The liner 12' is fed through the resin bath 28' and back into the low pressure space 24' by a third guiding roller 40', which in the present embodiment constitutes a pair of rollers. The liner 12' is subsequently guided in an opposite direction in relation to the primary vacuum seals 20' by a fourth guiding roller 44' and exits the low pressure space via a secondary vacuum lock 16". The functional principle of the secondary vacuum lock 16" is analogous to the primary vacuum lock 16', except for the conveying direction being reversed, i.e. from the low pressure space 24' into the ambient pressure space 42'.

After exiting the impregnation station 11, the liner 12 enters a wrapping station 46. In the wrapping station two plastic foils 48 and 48', which are corresponding in width to the liner 12, are applied on the downwardly and upwardly facing portions, respectively, of the outwardly facing surface of the impregnated liner 12'. The foils 48 and 48', which will be described in more detail in connection with FIG 5, are pressed towards the liner 12' by two sets of opposing rollers 50 and 50', and subsequently the two foils 48 and 48' are welded together by two welds along the edge in the direction of the liner, thereby forming a tube around the liner 12' The liner 12' and the foils 48 and 48' form a tubular liner assembly 12a having a flat shape when stored in a flexible non-cured state The liner assembly 12a may in an alternative embodiment (not shown here) be formed by wrapping a single large foil around the liner and pressing and subsequently welding the opposing ends together to form the tubular liner assembly 12a.

The above embodiment has the drawback of needing a secondary vacuum lock 16", which rollers may cause some resin to leak from the liner 12'. This may be partially prevented by a pre-curing before the liner 12' exits the low pressure space 24'. The advantage of the above embodiment is the compact shape, making it a preferred alternative for a mobile impregnation plant.

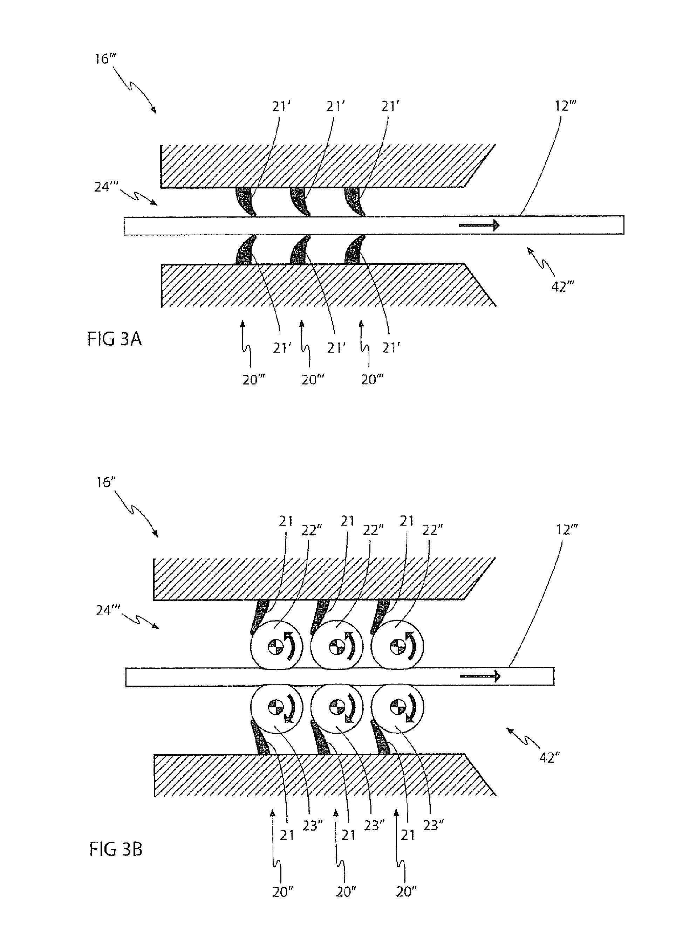

FIG 3A shows a close-up view of a vacuum lock 16"' having lip seals according to the present invention. The vacuum lock 16"' is located between a low pressure space 24"' and an ambient pressure space 42"'. The vacuum lock 16"' comprises 3 vacuum seals 20"', each comprising two juxtaposed lip seals 21'. A liner 12,'" is propagated through the vacuum seals 20"' between the lip seals 21'. The lip seals 21' seal the area between the wall of the vacuum lock 16'" and the liner 12'" pressure-tight.. The lip seals 21' are preferably made of rubber or any similar soft material The compartments between the vacuum seals 20'" will have reduced pressure as well They may optionally be connected to a vacuum pump or pressure regulator

FIG 3B shows a close-up view of an alternative embodiment of a vacuum lock 16. In the alternative embodiment the vacuum seals 20" additionally comprise two juxtaposed rollers 22", 23". A liner 12"' is propagated through the seal between the rollers 22", 23". The rollers 22", 23" are made of soft material, such as rubber foam, to achieve good sealing properties and at the same time avoid damage to the liner 12'". The rollers 22", 23" are sealed towards the wall of the vacuum lock by lip seals 21, preferably made of flexible material such as rubber Using rollers 22", 23" will reduce the resistance caused by friction when the liner is passing through the vacuum seals 20".. High resistance may cause damage to the liner 12'" since a high force is then needed to drive the liner 12'" through the vacuum seals 20" The rollers 22", 23" may optionally be motorized for additional reduction of the resistance.

The above embodiments may also be combined as a lip and roller seal. From the above it is evident to any person skilled in the art that the above vacuum locks may be employed to bridge not only a low pressure space and an ambient pressure space, but also a low pressure space and a high pressure space or an ambient pressure space and a high pressure space. It is further evident to the skilled person that the conveying direction of the liner may be reversed without any further changes to the vacuum lock. The arrow in FIGS 3A and 3B shows only a preferred conveying direction.

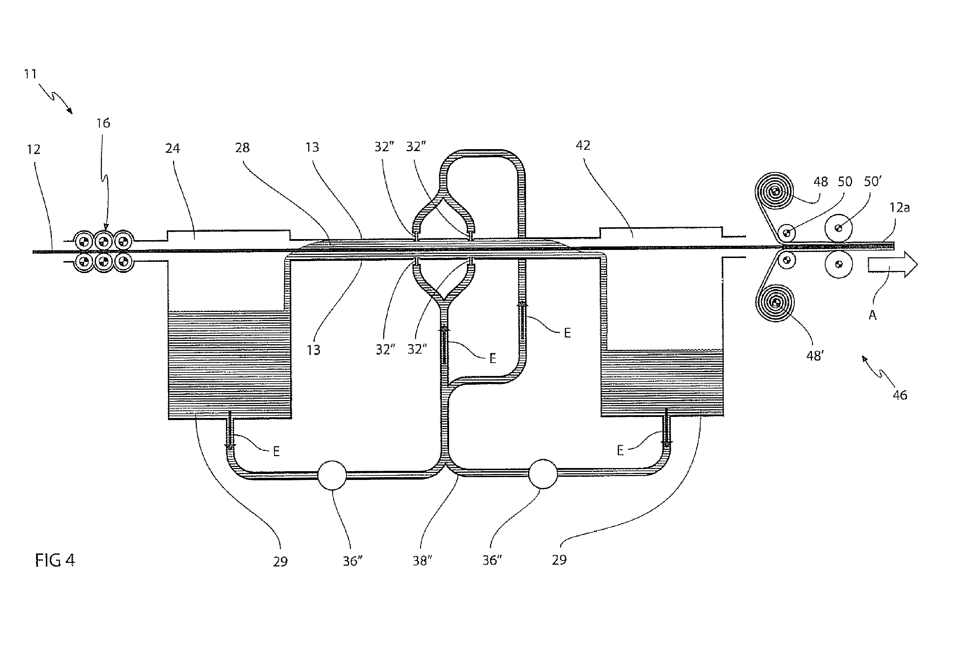

FIG 4 shows an alternative embodiment of an impregnation plant 10 according to the present invention. The alternative embodiment 10" features an impregnation station 11, which may be used in connection with the above vacuum lock 16. The impregnation station 11 comprises two parallel plates 13 located close to each other and defining a resin bath 28 between them. The plates 13 and thereby the resin bath 28 extends between a low pressure space 24 and an ambient pressure space 42. The distance between the plates is approximately equal to the thickness of the liner 12, so that the liner 12 may be accommodated between the plates 13. The liner 12 is conveyed through the resin bath 28 between the plates 13 from the low pressure space 24 to the ambient pressure space 42 in the direction of the arrow A

Each plate 13 comprises a set of nozzles 32" connected to a pipe system 38". A pump 36" propels the resin, which is indicated in FIG 4 by hatching, from a resin reservoir 29 via the nozzles 32" towards the liner 12. The liner 12 is thereby subjected to a pressurized resin jet from both sides. The continuous flow of resin will fill the resin bath 28 with resin. Due to the pressure of the resin a large amount of resin will penetrate deep into the liner and fill all the cavities of the liner with resin However, some resin will not enter the liner 12, but exit the resin bath 28 outside the liner as excess resin Due to the pressure, the excess resin will propagate towards the low pressure space 24 and in the opposite direction towards the ambient pressure space 42. The viscosity of the resin will cause the excess resin to propagate slowly outside the resin bath 28. A continuous supply of pressurized and viscous resin will completely fill the resin bath 28 and thus act as a liquid pressure seal between the low pressure space 24 and the ambient pressure space 42. It should be noted that the resin bath 28 is not completely encapsulated and a continuous flow of resin is required for impregnation and good sealing quality.

The excess resin is allowed to slowly drip off the resin bath 28 and may preferably be collected into the resin reservoir 29 outside the resin bath at both sides The excess resin may thus be re-used by re-circulating it along the arrows E from the resin bath via the pump 36" and nozzles 32" into the resin bath 28 towards the liner 12 and possibly again into the resin reservoir 29. A filter or the like may be applied in the resin reservoir 29 to remove any contamination from the used resin. Such contamination may be fibres of fibre particles released from the liner 12 during impregnation. Such contamination may possibly clog the nozzles 32", the pipe system 38" or the pump 36".

After exiting the impregnation station 11, the liner 12 enters a wrapping station 46. In the wrapping station two plastic foils 48 and 48', which correspond in width to the liner 12, are applied on the downwardly and upwardly facing portions, respectively, of the outwardly facing surface of the impregnated liner 12. The foils 48 and 48', which will be described in more detail in connection with FIG 5, are pressed towards the liner 12 by two sets of opposing rollers 50 and 50', and subsequently the two foils 48 and 48' are welded together by two welds along the edge in the direction of the liner, thereby forming a tube around the liner 12 The liner 12 and the foils 48 and 48' form a tubular liner assembly 12a having a flat shape when stored in a flexible non-cured state. The liner assembly 12a may in an alternative embodiment (not shown here) be formed by wrapping a single large foil around the liner and pressing and subsequently welding the opposing ends together to form the tubular liner assembly 12a

FIG 5A shows a liner assembly 12a produced by any of the impregnation plants shown in Figs 1, 2 and 4. The liner assembly 12a comprises a centrally located liner 12 of fibrous material which has been impregnated/soaked by resin. The liner assembly 12a further comprises a layer of foil 48 of a first type applied on the outwardly facing surface of the liner 12 as described in more detail in connection with FIGS 1, 2 and 4. In the present view, the liner 12 in FIGS 1, 2 and 4 has been juxtaposed and stitched together to form a tubular liner before impregnation, and the foil 48 is applied after impregnation to enclose the impregnated liner 12. In alternative embodiments, the liner 12 may be stitched together after the foil 48 has been applied The tubular liner assembly 12a has a diameter corresponding to the cross section of the pipe to be renovated. The liner assembly may optionally include a second foil 58 which is preferably applied before impregnation and stitched to the liner 12.

FIG 5B is a close-up view of the liner assembly 12a of FIG 5A, revealing in more detail the different layers of the first foil 48 surrounding the liner 12 of the tubular liner assembly 12a. The outwardly facing first foil 48 of the present embodiment consists of three layers, an outer layer 52, a middle layer 54 and an inner layer 56 The inner layer 56 is contacting the impregnated liner 12. The optional inwardly facing second foil 58 comprises a flexible layer, such as a PE layer, and a solvent barrier layer for preventing any leaking of styrene, such as a PA layer.

FIG 5C is a further close-up view of the liner assembly 12a of FIGS 5A and 5B, where the foils 48 and 58 have been separated from the liner 12, and the layers 52, 54 and 56 of the foil 48 are clearly visible. The outer layer 52 constitutes a UV barrier layer comprising a PE/PA/PE plastic foil including a constituent exhibiting filter characteristics preventing light of wavelengths below 475 nm from passing through, while allowing light of wavelengths above 475 nm to pass through. The middle layer 54 which is integrally joined to the UV barrier layer 52 consists of a foil of PE/PA/PE including styrene barrier characteristics to prevent any resin from the soaked liner 12 from leaking to the outside. The inner layer 56 is a fleece layer of PET applied as a coating of the styrene barrier layer 54 facing away from the UV barrier layer 52. The fleece layer 56 serves to give the foil 48 stability and additionally serves to bond the foil 48 to the resin of the liner 12 for avoiding any bubble formation between the liner 12 and the foil 48 Furthermore, the fleece layer will prevent slippage between the first foil 48 and liner 12 and thus aid the handling of the liner assembly 12a_Any bubbles forming between the liner 12 and the foil 48 may inhibit and/or disrupt the curing of the resin within the liner 12. The fleece layer 56 has preferably a thickness of approx. 0.2 mm to enable it to absorb a limited amount of resin and to avoid any excessive resin leaking to the outside. The second foil 58 which is covering the inwardly facing surface of the liner 12 is a single layer of PA/PE plastics to prevent the two opposing liner sections of the tubular liner assembly 12a from adhering and joining and to aid the installation of the liner assembly 12a by use of compressed fluid. The foil 48 should be substantially transparent for all wavelengths of light, in particular for UV light, and should preferably constitute a styrene barrier

FIG 5D shows the transmission spectrum of the second foil 58 located on the inside of the liner 12 of the liner assembly 12a. From the transmission spectrum it can be seen that the foil 58 is exhibiting a transmission of approx. 90% of the light of all wavelengths from 200 nm to 1000 nm This allows the liner assembly 12a to be cured after being installed into a pipeline by irradiating the liner 12 through the foil 58 by preferably UV light, alternatively violet or blue light. Occasionally any other light within the visible spectrum or even infrared light or heat may be used for curing.

FIG 5E shows the transmission spectrum of the UV barrier layer 52. The UV barrier layer 52 prevents about 90% of light of wavelengths below 475 nm from passing, while allowing approx. 90% of light having a wavelength above 475 nm to pass through the UV barrier 52. This will allow the liner assembly 12a to be stored outdoors subjected to solar irradiation without being accidentally cured by the incoming UV radiation. It will still allow visual inspection of the liner 12 before and after curing to reveal any possible voids, e.g bubble formation, within the liner 12 of the liner assembly 12a.

Preferably the liner assembly 12a is pulled into the pipeline from a manhole by the use of a winch In this way the first foil 48 having the fleece and the UV barrier characteristics is facing outwardly. When the liner assembly 12a is in a proper position it is inflated by the use of compressed air and subsequently cured, preferably by light.. Finally, the second foil 58 facing inwardly may be removed. In case the present liner assembly 12a is to be used together with the previously mentioned eversion technology, the curing of the resin has to be made by visual light and/or infrared light and/or heat. The outside of the liner, which is exhibiting the UV barrier characteristics, will after eversion have become the inside of the liner, thus preventing any UV curing of the liner 12. In alternative embodiments, the foils 48 and/or 58 may be removed after curing. It should also be noted that in cases where sunlight may affect the installed liner, such as in open-ended pipelines, it might be of advantage to have a UV proof foil remaining, since long time exposure to UV light may degrade the liner and/or the pipeline The foil 56 may typically only be loosely attached to the liner 12 and may thus be easily removed. In yet other alternative embodiments the foil 58 may be replaced by a transparent foil prior to UV curing

FIG 5F shows a welding configuration featuring two opposing wedges 62 and 62'. The wedges 62 and 62' are used to partially lift the ends of the flat liner assembly 12a to allow a tighter fit of the first foil 48 around the liner 12. The present welding configuration is preferably used for large liner assemblies, e.g. liner assemblies of a diameter of 300 mm - 400 mm or more. In the present configuration two opposing foils 48 and 48' being of the first foil type are applied, enclosing the liner 12. The foils 48 and 48' have a total width slightly larger than the liner 12, and one foil 48 is slightly smaller than the other foil 48' so that when the foils are juxtaposed around the liner 12 the one foil 48 will overlap the other foil 48' at two instances on the same side of the flat liner assembly 12a so that the fleece layer 56 of one foil 48 contacts the UV barrier layer 52 of the other foil 48'. Subsequently, two welds 60 and 60' are applied on the two overlapping sections of the foils 48 and 48' to form a single continuous first foil 48.

FIG 5G shows the liner assembly 12a after welding when the wedges have been removed.

FIG 5H shows another welding configuration which is preferably used for liners of smaller diameter, e.g. of a diameter less than 300 mm - 400 mm. In the present embodiment a single foil 48 having a slightly larger width than the liner 12 is applied around the liner 12 in a partially overlapping configuration. Subsequently, one weld 60 is applied on the overlapping section of the foil 48 to form a single continuous first foil 48.

FIG 5I shows an alternative liner assembly 12a' produced by any of the impregnation plants shown in FIGS 1, 2 and 4. The liner assembly 12a' comprises a centrally located liner 12 of fibrous material which has been impregnated/soaked with resin, similar to the liner assembly 12a shown in FIG 5A. In the present configuration, a first foil 48 and a third foil 49 are applied, enclosing the liner 12. The first foil 48 and the third foil 49 together have a total width slightly larger than the liner 12, and the first foil 48 is slightly larger than the third foil 49, similar to the embodiment shown in Fig 5F. The first foil 48 and the third foil 49 are positioned in a partially overlapping configuration so that the third foil 49 is partially located between the first foil 48 and the liner 12. A fourth foil 59 is applied, covering the third foil 49 and partially overlapping the first foil 48 at the location where the third foil 49 and the first foil 48 are overlapping. The fourth foil 59 is welded to the first foil 48 by welds 60. As in the previous embodiments, a second foil 58 may optionally be applied before impregnation and stitched onto the inwardly oriented surface of the liner 12

FIG 5J shows a close-up view of the liner assembly 12a' at the location where the first foil 48, the second foil 58, the third foil 49 and the fourth foil 59 are overlapping. The optional inwardly facing second foil 58 comprises a flexible layer such as a PE layer and a solid barrier layer for preventing any leaking of styrene such as a PA layer The third foil includes an inwardly layer of fleece 56 and an outwardly oriented cover layer 57 of PP foil The first foil 48 includes an inwardly layer of fleece 56, an intermediate styrene barrier layer 54 and an outwardly oriented UV barrier layer 52. The fourth foil includes an inner styrene barrier layer 54 and an outer UV barrier layer 52. In this way, the UV barrier layer 52 of the first foil 48 is welded to the styrene barrier layer 54 of the fourth foil 59 This has the advantage that the weld is made between foil portions essentially consisting of plastic foil only, without the participation of the fleece layer 56 in the weld. This will improve the strength of the weld

FIG 5K shows the liner assembly 12a' at a location outside the above mentioned overlapping foils. This section of the liner assembly 12a' resembles the liner assembly 12a shown in FIG 5A.

In the present context it is to be understood that the separate UV barrier layers and styrene barrier layers of the first foil and/or the fourth foil in the embodiments shown in FIGS 5A-5K are shown for illustrative purposes only and that the embodiments may be modified to instead include a first foil and/or fourth foil in which the UV barrier layer and the styrene barrier layer are integrated into a single layer constituting a PE/PA/PE layer.. In the embodiment of FIG 5I-K the weld between the first foil 48 and the fourth foil 59 will thus be a weld between two PE/PA/PE surfaces..

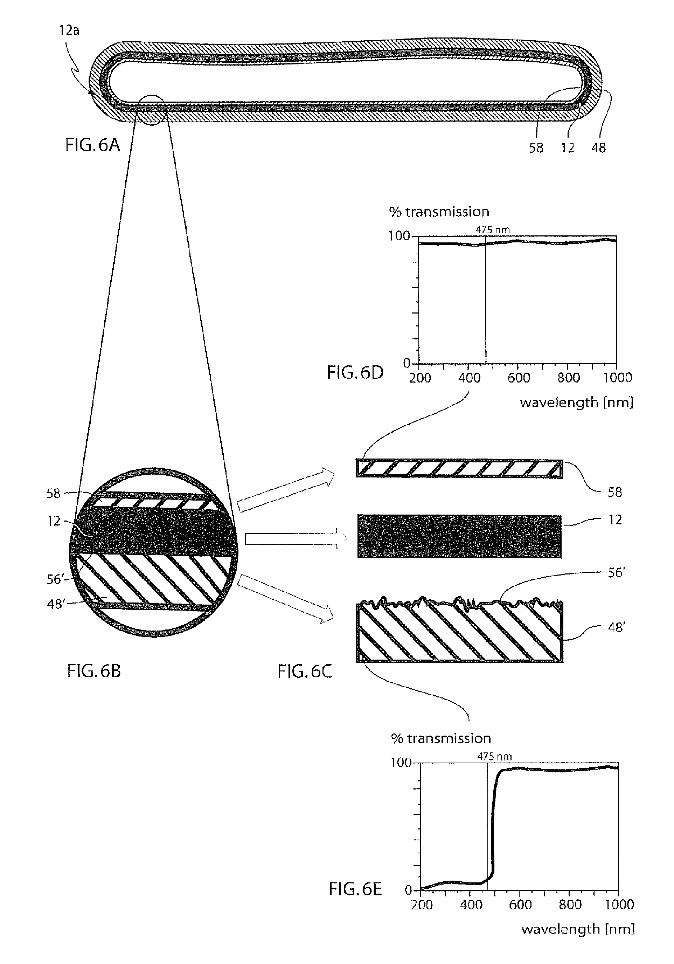

FIGS 6A-6E show an alternative embodiment of a liner assembly 12a sharing most features with the previously shown embodiment of FIGS 5A-E, however, having a slightly modified first foil 48' having integrated UV and resin barrier properties and fleece properties. The first foil 48' of the present embodiment is made of a continuous PE/PA/PE plastic layer having resin, styrene and UV barrier properties.. The first foil 48 further comprises a fleece layer 56' laminated onto the PE/PA/PE layer similar to the previous embodiment.

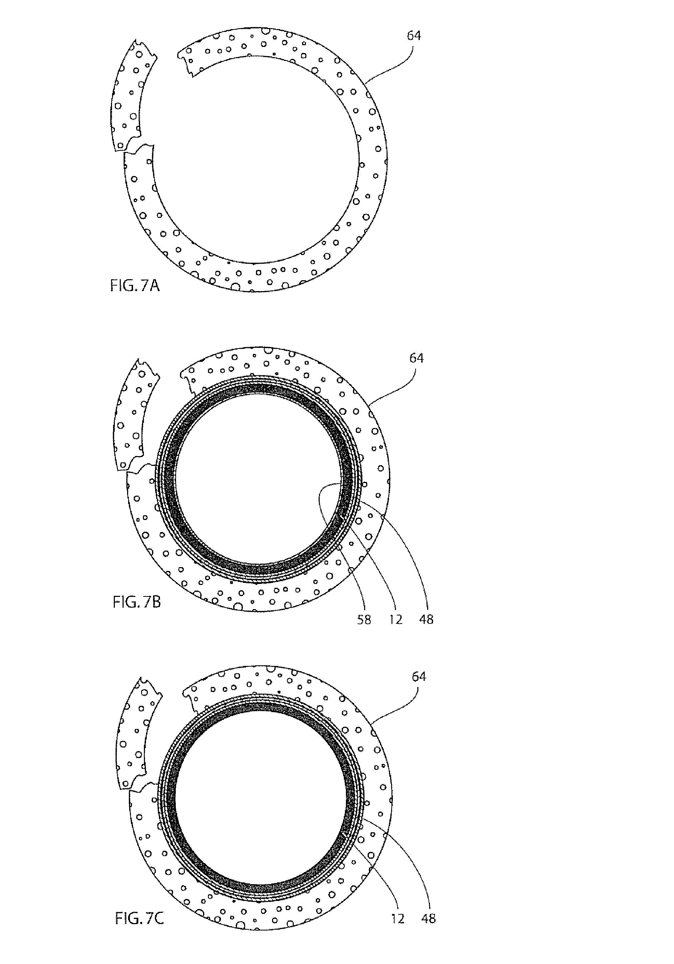

FIG 7A shows a leaking pipeline 64 The pipeline 64 is typically a sewer pipeline but may as well be a gas pipeline or any other kind of pipeline. The leaking pipeline will be renovated by installing a liner assembly 12a therein.

FIG 7B shows a leaking pipeline 64 when a liner assembly 12a has been installed and inflated therein by compressed air. The liner 12 is thereafter cured by irradiation of UV or alternatively blue light to allow the resin in the liner 12 to harden.

FIG 7C shows the leaking pipeline 64 after curing and ready to be used again. The second foil has been removed and disposed.

To sum up, the first foil as described above is, apart from acting as a barrier for the above mentioned light frequencies, completely resin-tight so that no resin may flow or diffuse through the first foil. The first foil has furthermore a diffusion barrier for preventing any solvents, such as styrene as mentioned above, from penetrating the foil

In the present context the word "eversion" has been used to describe the well-known method of inverting a liner into a pipeline, which method is also sometimes referred to as "inversion"

Although the above liner is described as being curable by UV light, it may alternatively be cured by heat (e.g. steam and/or hot water) or a combination of heat and light (UV, lR or visual light).

Although the fleece material of the coating of the first plastic foil is described as being made of PET, other fleece materials such as PAN, PP and other polyesters may be used and offer a good bonding to the liner and the resin.

The division of the first foil into separate UV barrier and styrene layers 52, 54 is merely intended for illustrative purposes, and the first foil may consequently comprise a single layer having both solvent (e.g. styrene) and UV barrier characteristics, such as a PE, PE/PA/PE or PP/PA foil having constituents for absorbing or reflecting UV light

Alternatively, the second foil may comprise a UV barrier layer and/or a styrene barrier layer in addition to or replacing the corresponding barrier layer on the first foil.

### List of parts

10 Impregnation plant
11 Impregnation station
12. Liner
12a. Liner assembly
13 Plate
14 Opening
15 Ambient pressure chamber
16 Vacuum lock
18 First guiding roller
20 Vacuum seal
21 Lip seal
22 Sealing roller
23 Sealing roller
24 Low pressure space
26 Second guiding roller
28 Resin bath
29 Resin reservoir
32 Nozzle
34 Bottom
36 Pump
38 Pipe system
40 Third guiding roller
42 Ambient pressure space
44 Fourth guiding roller
46 Wrapping station
48 First foil
49 Third foil
50 Opposing rollers
52 UV barrier layer
54 Styrene barrier layer
56 Fleece layer
57 PE layer
58 Second foil
59 Fourth foil
60 Weld
62 Wedge
64 Leaking pipeline

A & B denote the liner-conveying direction, C & D the resin level and E the resin circulation direction It should further be noted that a prim (') symbol in the description and in the FIGS denotes an alternative realization or variant of the same part

The invention is characterised by the following points:
1. An impregnation plant for manufacturing a liner assembly, the liner assembly comprising a first foil and a liner for being impregnated with a resin, the resin being curable by irradiation of light having a specific wavelength or specific wavelengths in the range between 200 nm and 475 nm, the liner being fibrous and flexible and defining a first surface and an opposite second surface, the first foil being flexible and having on at least one side a coating of fleece material, the impregnation plant comprising:
   a vacuum lock comprising a housing having an inlet and an outlet and defining an ambient pressure space near the inlet and a low pressure space near the outlet, the ambient pressure space and the low pressure space being separated by a substantially gas-tight seal comprising a first sealing element and a second sealing element located juxtaposed the first sealing element, the first and second sealing elements being flexible for allowing the fibrous liner to be conveyed through the seal between the first sealing element and the second sealing element in a direction from the inlet towards the outlet, the liner being degassed by compressing the liner into a compressed state between the first and second sealing elements and subsequently relaxing the liner into a substantially uncompressed state inside the low pressure space,
   a vacuum pump communicating with the low pressure space for reducing the pressure in the low pressure space in relation to the pressure in the ambient pressure space,
   an impregnation station being in gas-tight communication with the outlet of the vacuum lock, the impregnation station comprising a resin bath for accommodating the liner, a resin reservoir, a nozzle, a pipe system and a resin pump for propelling the resin from the resin reservoir via the pipe system and the nozzle into the resin bath in a direction towards the liner, and
   a wrapping station for covering the liner with the first foil by juxtaposing and contacting the first surface of the liner with the coating of fleece material of the first foil.
2. The impregnation plant according to point 1, wherein the resin reservoir constitutes a resin receptacle for receiving excess resin.
3. The impregnation plant according to any previous point, wherein the impregnation station has a first end being in gas-tight communication with the outlet of the vacuum lock and a second end being in gas-tight communication with a further vacuum lock, the further vacuum lock comprising a further housing having a further inlet and a further outlet and defining a further ambient pressure space near the further outlet and a further low pressure space near the further inlet, the further ambient pressure space and the further low pressure space being separated by a substantially gas-tight further seal comprising a further first sealing element and a further second sealing element located juxtaposed the further first sealing element, the further first and second sealing elements being flexible for allowing the fibrous liner to be conveyed through the further seal between the further first sealing element and the further second sealing element in a direction from the further inlet towards the further outlet.
4. The impregnation plant according to any of the points 1-2, wherein the impregnation station has a first end being in gas-tight communication with the outlet of the vacuum lock and a second end being open to the outside ambient pressure, the first end and the second end being separated gas-tight by the resin.
5. The impregnation plant according to any previous point, wherein the resin bath is formed between the first and second end by the continuous supply of resin by the nozzle.
6. The impregnation plant according to any of the previous points, wherein the impregnation station comprises a system for monitoring the level of resin in the resin reservoir.
7. The impregnation plant according to any of the previous points, further comprising a resin supply tank and a resin supply pump for delivering resin from the resin supply tank to the resin reservoir.
8. The impregnation plant according to any previous point, wherein the impregnation station comprises two nozzles mounted in a juxtaposed position for applying the resin on both sides of the liner.
9. The impregnation plant according to any previous point, wherein the impregnation station comprises a plurality of nozzles, such as 2-1000, preferably 100-800, more preferably 400-600, most preferably 400, or alternatively 200-400, or alternatively 400-600.
10. The impregnation plant according to any previous point, wherein the low pressure space has an absolute pressure lower than 100 kPa, preferably 10-90 kPa, more preferably 50-70 kPa, most preferably 60 kPa, or alternatively 50-60 kPa, or alternatively 60-70 kPa
11. The impregnation plant according to any previous point, wherein the low pressure space comprises a system for monitoring the pressure in the low pressure space.
12. The impregnation plant according to any previous point, wherein the sealing element comprises a roller seal or alternatively a lip seal or yet alternatively a roller+lip seal
13. The impregnation plant according to point 12, wherein the roller comprises elastomeric material, such as rubber foam.
14. The impregnation plant according to any of the preceding points, wherein the liner is guided through the impregnation plant by one or more guiding rollers.
15. The impregnation plant according to any of the points 12-14, wherein the roller and/or the guiding roller is driven by a motor, such as a pneumatic motor or an electric motor.
16. The impregnation plant according to any of the preceding points, further comprising a vacuum lock having more than 2 rollers, such as eg 3-10 rollers, or preferably 6 rollers.
17. The impregnation plant according to any of the preceding points, further comprising a control unit for controlling various parameters such as the pressure in the low pressure space, the pressure of the resin jet, the level of resin, the velocity of the liner.
18. The impregnation plant according to any of the previous points, wherein the liner is submerged in the resin reservoir.
19. The impregnation plant according to any previous point, wherein the resin reservoir comprises a first vessel having an elongated and substantially vertical orientation and defining an upper inlet and a lower outlet, a second vessel having an elongated and substantially vertical orientation and defining a lower inlet and an upper outlet, and a third vessel connecting the lower outlet and the lower inlet.
20. The impregnation plant according to point 19, wherein the first vessel of the resin reservoir and/or the second vessel of the resin reservoir have/has an elongation of 1-10 meters, preferably 2-6 meters, more preferably 3-5 meters, and most preferably 4 meters, or alternatively 2-4 meters, or alternatively 4-6 meters.

## Claims

1. An impregnation plant (10) for manufacturing a liner assembly (12a), said liner assembly (12a) comprising a first foil (48) and a liner (12) for being impregnated with a resin, said resin being curable by irradiation of light having a specific wavelength or specific wavelengths in the range between 200 nm and 475 nm, said liner (12) being fibrous and flexible and defining a first surface and an opposite second surface, said first foil (48) being flexible and having on at least one side a coating of fleece material (56), said impregnation plant (10) comprising.
a vacuum lock (16) comprising a housing having an inlet and an outlet and defining an ambient pressure space (15) near said inlet and a low pressure space (24) near said outlet, said ambient pressure space and said low pressure space (24) being separated by a substantially gas-tight seal comprising a first sealing element and a second sealing element located juxtaposed said first sealing element, said first and second sealing elements being flexible for allowing said fibrous liner (12) to be conveyed through said seal between said first sealing element and said second sealing element in a direction from said inlet towards said outlet, said liner (12) being degassed by compressing said liner (12) into a compressed state between said first and second sealing elements and subsequently relaxing said liner (12) into a substantially uncompressed state inside the low pressure space (24),
a vacuum pump (36) communicating with said low pressure space (24) for reducing the pressure in said low pressure space (24) in relation to the pressure in said ambient pressure space,
an impregnation plant (11) being in gas-tight communication with said outlet of said vacuum lock (16), said impregnation plant (11) comprising a resin bath (28) for accommodating said liner (12), a resin reservoir (29), a nozzle (32), a pipe system (38) and a resin pump (36) for propelling said resin from said resin reservoir (29) via said pipe system (38) and said nozzle (32) into said resin bath (28) in a direction towards said liner (12), and
a wrapping station (46) for covering said liner (12) with said first foil (48) by juxtaposing and contacting said first surface of said liner (12) with said coating of fleece material of said first foil (48)

2. The impregnation plant (10) according to claim 1, wherein said liner (12) is covered by a second foil (58) juxtaposing and contacting said second surface of said liner (12).

3. The impregnation plant (10) according to any of the claims 1-2, wherein said first foil (48) and/or said second foil (58) has an optical filter characteristic substantially eliminating light transmission of said specific wavelength or said specific wavelengths in the range between 200 nm and 475 nm.

4. The impregnation plant (10) according to claim 3, wherein said optical filter characteristic of said first foil (48) and/or said second foil (58) substantially eliminates light transmission of said specific wavelength or said specific wavelengths in the range between 200 nm and 475 nm to a level avoiding any substantial curing of said resin of said liner (12) during at least 1 hour, preferably 1 day, more preferably 1 week, most preferably 1 month or more such as 6 months, of exposure to sunlight of said liner assembly (12a), or, alternatively, wherein said first foil (48) and/or said second foil (58) has an optical filter characteristic substantially eliminating light transmission of said specific wavelength or said specific wavelengths to at least 90%, preferably 95%, more preferably 99% and most preferably 99.9% of the incoming radiation.

5. The impregnation plant (10) according to any of the preceding claims, wherein said liner (12) is tubular and said first foil (48) and/or second foil (58) is either applied as two opposing foils enclosing said liner (12) or as a single foil enclosing said liner (12), or alternatively wherein said liner (12) is tubular and said first foil is applied as an inner foil (48) having a fleece layer contacting said liner (12), an intermediate foil (49) having a fleece layer (56) contacting said liner and partially overlapping said inner foil (48), and an outer foil (59) not including a fleece layer and at least partially overlapping said inner foil (48).

6. The impregnation plant (10) according to any of the preceding claims, wherein said first foil (48) and/or second foil (58) exhibits a transmittance to one or more wavelengths in the range outside said specific wavelength or said specific wavelengths, preferably between 475 nm and 780nm, such as wavelengths in the range between 475 and 550 nm, or alternatively 550 nm and 600 nm, or alternatively 600 nm and 780 nm

7. The impregnation plant (10) according to claim 6, wherein said transmittance of said first foil (48) and/or second foil (58) amounts to at least 25%, preferably 50%, more preferably 70% and most preferably 90% of the incoming radiation.

8. The impregnation plant (10) according to any of the preceding claims, wherein said first foil (48) and/or second foil (58) comprises a resin barrier and optionally a solvent barrier, such as a styrene barrier.

9. The impregnation plant (10) according to any of the preceding claims, wherein said fleece material is covering said at least one side of said first foil (48) entirely.

10. The impregnation plant (10) according to any of the preceding claims, wherein each of said coating of fleece material and said first foil (48) has a thickness of between 0.1 mm and 0.3 mm, such as 0.2 mm.

11. An impregnation assembly for impregnating a liner assembly (12a), said liner assembly (12a) comprising a first foil (48) and a liner (12) for being impregnated with a resin, said resin being curable by irradiation of light having a specific wavelength or specific wavelengths in the range between 200 nm and 475 nm, said liner (12) being fibrous and flexible and defining a first surface and an opposite second surface, said first foil (48) being flexible and having on at least one side a coating of fleece material (56), said impregnation assembly comprising an impregnation plant (11) and a wrapping station (46), a station comprising a resin bath (28) for accommodating a fibrous liner (12), a resin reservoir (29), a nozzle (32), a pipe system (38) and a resin pump (36) for propelling said resin from said resin reservoir (29) via said pipe system (38) and said nozzle (32) into said resin bath (28) in a direction towards said liner (12), said wrapping station (46) covering said liner (12) with said first foil (48) by juxtaposing and contacting said first surface of said liner (12) with said coating of fleece material of said first foil (48).

12. A method of impregnating a liner assembly (12a) by providing an impregnation plant (10), said liner assembly (12a) comprising a first foil (48) and a liner (12) for being impregnated with a resin, said resin being curable by irradiation of light having a specific wavelength or specific wavelengths in the range between 200 nm and 475 nm, said liner (12) being fibrous and flexible and defining a first surface and an opposite second surface, said first foil (48) being flexible and having on at least one side a coating of fleece material (56), said liner (12) being fibrous and flexible, said impregnation plant (10) comprising:
a vacuum lock (16) comprising a housing having an inlet and an outlet and defining an ambient pressure space near said inlet and a low pressure space (24) near said outlet, said ambient pressure space and said low pressure space (24) being separated by a substantially gas-tight seal comprising a first sealing element and a second sealing element located juxtaposed one another, said first and second sealing element being flexible,
a vacuum pump (36) communicating with said low pressure space (24),
an impregnation plant (11) being in gas-tight communication with said outlet of said vacuum lock (16), said impregnation plant (11) comprising a resin bath (28), a resin reservoir (29), a nozzle (32), a pipe system (38) and a resin pump (36), and
a wrapping station (46), and
by performing the following steps:
reducing the pressure in said low pressure space (24) in relation to the pressure in said ambient pressure space,
degassing said liner (12) by conveying said liner (12) through said seal between said first sealing element and said second sealing element in a direction from said ambient pressure space to said low pressure space (24),
impregnating said liner (12) by conveying said liner (12) through said impregnation plant (11) and by using said pump (36) propelling said resin from said resin reservoir (29) via said pipe system (38) and said nozzle (32) into said resin bath (28) in a direction towards said liner (12), and
covering said liner (12) with said first foil (48) by juxtaposing and contacting said first surface of said liner (12) with said coating of fleece material of said first foil (48) by using said wrapping station (46).

13. A method of impregnating a liner assembly (12a) by providing an impregnation assembly, said liner assembly (12a) comprising a first foil (48) and a liner (12) for being impregnated with a resin, said resin being curable by irradiation of light having a specific wavelength or specific wavelengths in the range between 200 nm and 475 nm, said liner (12) being fibrous and flexible and defining a first surface and an opposite second surface, said first foil (48) being flexible and having on at least one side a coating of fleece material (56), said impregnation assembly comprising:
a resin bath (28), a resin reservoir (29), a nozzle (32), a pipe system (38), a resin pump (36) and a wrapping station (46), and
by performing the following steps:
impregnating said fibrous liner (12) by accommodating and conveying said liner (12) through said resin bath (28) and propelling said resin from said resin reservoir (29) via said pipe system (38) and said nozzle (32) into said resin bath (28) in a direction towards said liner (12),
covering said liner (12) with said first foil (48) by juxtaposing and contacting said first surface of said liner (12) with said coating of fleece material of said first foil (48) by using said wrapping station (46),

14. A liner assembly (12a) comprising a first foil (48) and a liner (12) being impregnated with a resin, said resin being curable by irradiation of light having a specific wavelength or specific wavelengths in the range between 200 nm and 475 nm, said liner (12) being fibrous and flexible and defining a first surface and an opposite second surface, said first foil (48) having an optical filter characteristic substantially eliminating light transmission of said specific wavelength or said specific wavelengths in the range between 200 nm and 475 nm, said first foil (48) being flexible and having on at least one side a coating of fleece material (56), said first foil (48) covering said liner (12) and said coating of fleece material (56) of said first foil (48) juxtaposing and contacting said first surface of said liner (12).

15. The liner assembly (12a) according to claim 14, wherein said first foil (48) is impermeable to resin and said liner (12) is being impregnated by resin before said first foil (48) is applied on said liner (12).
